Europäisches Patentamt

**European Patent Office**

**Office européen des brevets**

(11) Veröffentlichungsnummer: **0 489 966 A1**

# EUROPÄISCHE PATENTANMELDUNG

(21) Anmeldenummer: **90124186.9**

(51) Int. Cl.⁵: **B25J 19/00**

(22) Anmeldetag: **14.12.90**

(43) Veröffentlichungstag der Anmeldung:
**17.06.92 Patentblatt 92/25**

(84) Benannte Vertragsstaaten:
**AT BE CH DE DK ES FR GB GR IT LI LU NL SE**

(71) Anmelder: **NIKO-LUFTFAHRT-ROBOTIC GMBH**
**Joseph-von Fraunhofer-Strasse 27**
**W-4600 Dortmund 50(DE)**

(72) Erfinder: **Nickel, Günter**
**Im Frankenthal 2**
**W-5248 Wissen(DE)**

(74) Vertreter: **Grave, Ivar Gerhard, Dipl.-Phys.**
**Aachener Strasse 321**
**W-5000 Köln 41(DE)**

(54) **Roboter mit mindestens einem Roboterarm.**

(57) In einem Roboter, der mindestens einen Roboterarm mit einer Mehrzahl von als Bewegungsachsen dienende kinematische Armeinheiten aufweist und wobei der Roboterarm mit Leitungen und Schläuchen zwecks Zufuhr von Energie und/oder Arbeitsmitteln versehen ist,
werden diese Leitungen oder Schläuche für die verschiedenen Handhabungsgeräte innerhalb der beweglichen Armeinheiten oder einer Anzahl von Armeinheiten selbst angeordnet, z. B. in sechs Armeinheiten.

Fig. 4

Die Erfindung betrifft einen Roboter mit mindestens einem Roboterarm, der eine Mehrzahl von, insbesondere sechs, als Bewegungsachsen dienende kinematische Armeinheiten aufweist, wobei der Roboterarm mit einer Mehrzahl von unterschiedlichen, Energie und/oder Arbeitsmittel zuführenden Leitungen oder Schläuchen versehen ist.

Roboter, d. h. automatisch arbeitende Arbeitsmaschinen haben besondere Bedeutung als Werkzeugmaschinen, um durch eine Steuerung festgelegtes Arbeitsprogramm in der richtigen Reihenfolge und vorgegebener Geschwindigkeit durchzuführen. Sie dienen z. B. zum Schweißen, Drehen, Fräsen, Bohren und Schleifen und haben zu diesem Zweck an der letzten Armeinheit des Roboterarmes ein zugehöriges, aufgespanntes Handhabungswerkzeug, welches auswechselbar ist. Man spricht auch von einer werkzeugseitigen Loshälfte und einer roboterseitigen Festhälfte als Teile einer Spannkupplung. Hierbei ist es notwendig, das Handhabungswerkzeug mit Energie und Arbeitsmitteln zu versorgen, z. B. bei einer Schweißzange mit Strom, einem Kühlmittel, einem Schutzgas udgl.

Je nach Einsatz des Roboterarmes sind verschiedene solcher Arbeitsmittel zuzuführen und zwar im Einzelfall in beachtlicher Vielzahl.

Es ist bereits bekannt, diese Arbeitsmittel und die Energie mit Hilfe von Leitungen oder Schläuchen dem Handhabungswerkzeug heranzuführen, wobei in der Regel die Anschlußelemente hierfür besonders abgewinkelt werden müssen, um die Führung zu erleichtern. Unabhängig hiervon bleiben die Schläuche auf dem Weg vom Eingangsbereich bis zum Roboterkopf, mehr oder weniger abgestützt, im Raum hängen, beanspruchen diesen zusätzlichen Raumbereich, verkleinern dadurch den Aktionsbereich des Roboterarmes, verlangen spezielle Kabelführungen bzw. Aufhängungen, sind einem zusätzlichen Verschleiß der Kinematik des Roboterarmes ausgesetzt als auch ungeschützt.

Der Erfindung liegt die Aufgabe zugrunde, die vorstehenden Nachteile zu vermeiden und eine Anordnung von Leitungen und Schläuchen am Roboterarm vorzuschlagen, die einen gedrungenen Platzbedarf hat, den Aktionsbedarf des Roboterarmes minimal einengt und gegen äußere Einflüsse wesentlich besser geschützt ist.

Diese Aufgabe wird erfindungsgemäß durch die im Kennzeichen des Patentanspruches 1 angegebene Maßnahmen erreicht.

Vorteilhafte Ausgestaltungen sind in den Unteransprüchen dargestellt. Diese Ausführungsform ist ferner dort besonders vorteilhaft, wo ein Einsatz im Bereich der Luft-, Raum- und Schiffahrt vorgesehen ist, z. B. bei der Reinigung von Großraumflugzeugen. Gleiches gilt sinngemäß für Räume und Anlagen, z. B. auch auf Flughäfen, wo eine erhöhte Anzahl von Tankwagen zwecks Brennstoffversorgung von Luftfahrzeugen udgl. vorhanden als auch hin und her gefahren bzw. Brennstoffschläuche zu- und abgekoppelt werden, so daß für den Explosionsschutz besondere Vorsichtsmaßnahmen einzuhalten sind. Dem wird durch die Erfindung und durch die zugehörige geschützte Anordnung und Führung von Energieleitungen innerhalb des Roboterarmes wesentlich besser als bisher genüge getan.

Eine Ausführungsform der Erfindung ist in der Zeichnung dargestellt und wird im folgenden näher erläutert. Es zeigt:

Fig. 1 eine Seitenansicht, schematisch, auf einen Roboterarm mit sechs Bewegungsachsen bzw. Armeinheiten,

Fig. 2, vereinfacht, eine Ansicht in Richtung II-II der Fig. 1,

Fig. 3, vereinfacht, eine Ansicht in Richtung III-III der Fig. 1,

Fig. 4 einen Roboterarm mit sechs Armeinheiten in einer Arbeitsstellung, ohne Handhabungswerkzeug,

Fig. 5 eine schematische Draufsicht auf einen Flansch im Ausgangsbereich der Energiezufuhr, wobei eine Anzahl von Leitungen und Schläuchen für Energie und/oder Arbeitsmittel veranschaulicht wird.

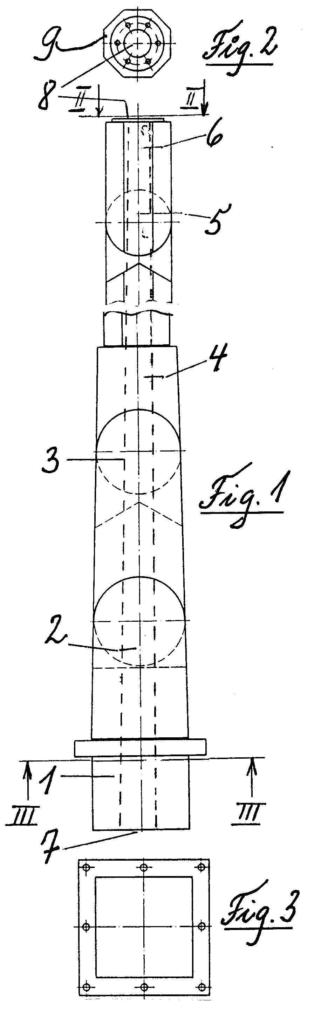

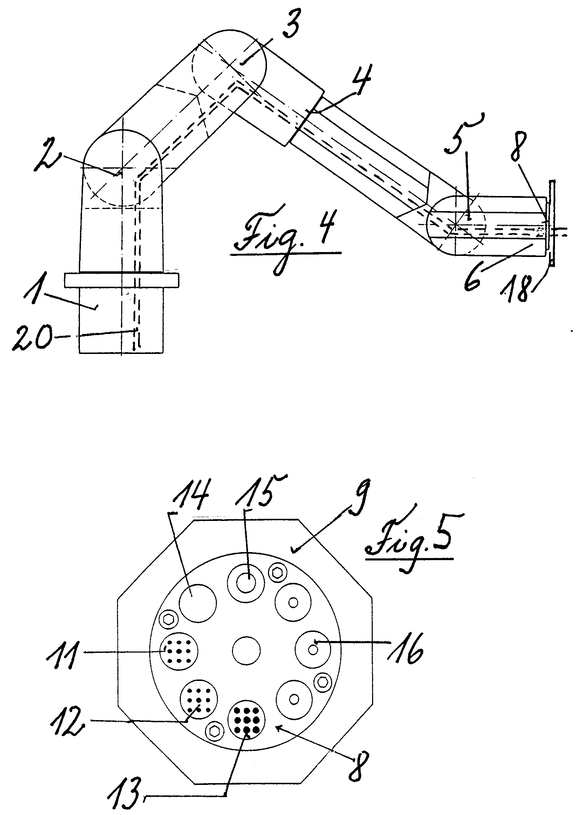

Ein Roboterarm, vgl. Fig. 1, 4 hat im Ausführungsbeispiel sechs Bewegungsachsen, die hier als Armeinheiten 1-6 bezeichnet sind. Die vielfältig möglichen Arm- und Arbeitsstellungen des Roboterarmes sind am besten der Fig. 4 zu entnehmen, das Handhabungswerkzeug ist hier nicht, jedoch nur schematisch seine zugehörige Loshälfte 18 im Ausgangsbereich 8 der Energiezuführung für das Handhabungswerkzeug dargestellt.

Die einzelnen Armeinheiten 1-6, insbesondere die letzte Armeinheit 6, beispielsweise für die Reinigung von Großraumflugzeugen, sind aus einer kochfesten Aluminiumlegierung hergestellt. Sie sind ferner wasserdicht und explosionsgeschützt in bezug auf ihren Innenraum ausgebildet. Für die Armeinheiten sind vorteilhaft bürstenlose Servoantriebe und ggfs. ein Zweifach-Meßsystem vorgesehen.

Über den Eingangsbereich 7 wird Energie und Arbeitsmittel dem Handhabungswerkzeug zugeführt, im Ausführungsbeispiel, vgl. Fig. 5:
Durch ein erstes, zweites und ein drittes Signalkabel 11, 12 bzw. 13; ferner Preßluft über den Preßluftschlauch 14, Wasch- oder Reinigungswasser über den Wasserschlauch 15, ein vorbestimmtes Zusatzmittel, z.B. als Waschmittelzusatz über den Schlauch 16. Die Signalkabel können zur Zuführung von digitalen und analogen Signalen für die Sensorik, den Greifer usw. dienen, ferner zum Betreiben der Motoren, die im Falle der Flugzeugreinigung die Waschbürsten drehen, udgl. Diese Aufzählung ist nicht erschöpfend. Je nach einzelnem Einsatz und Zweckbestimmung ist die Art der zugeführten Energie und des Arbeitsmittels unterschiedlich, z. B. dann, wenn nicht Flugzeuge zu reinigen, sondern eine Schweißzange als Handhabungswerkzeug, aufgespannt auf die Loshälfte 18, zu versorgen ist.

In Fig. 4 ist schematisch ein zugehöriger Strang für Leitungen und/oder Schläuche, durch die Energie und/oder Arbeitsmittel dem Roboterkopf, hier zur sechsten Armeinheit herangeführt wird, nur schematisch dargestellt. Zunächst ist erkennbar, daß diese Energiezuführung durch Strang 20 die ganze Kinematik des Roboterarmes, d. h. alle Armeinheiten 1-6 durchsetzt. Dies stellt den Regelfall dar, die Leitungsführung ist auf diese Weise am besten explosionsgeschützt bzw. gegen sonstige äußere Einflüsse abgeschirmt.

Im Einzelfall kann es erforderlich werden, den Strang 20 oder die in Fig. 5 dargestellten Leitungen und Schläuche aus einem der Armeinheiten herauszunehmen und --- dann auf nur kurzem Wege außerhalb des Armes --- bis zur nächsten oder einer vorbestimmten Armeinheit heranzuführen, um anschließend wiederum den Strang 20 innerhalb der Armeinheiten bis zum Ende, d. h. zur letzten Armeinheit bzw. dem Roboterkopf, hier also zur sechsten Armeinheit durchzuführen. Wie in Fig. 4 nur schematisch dargestellt, tritt der Strang 20 bzw. treten die Energie- und Arbeitsmittelleitungen etwa aus der Mitte der letzten Armeinheit, hier der sechsten Armeinheit heraus und gelangen weiter zu dem nicht dargestellten Handhabungswerkzeug.

Es ist hieraus auch als vorteilhaft erkennbar, daß nunmehr sämtliche Handhabungswerkzeuge ausschließlich an der letzten Armeinheit, hier der Armeinheit 6, angedockt, d. h. angeschlossen werden als auch mit Energie- und Arbeitsmitteln versorgt werden. Es kann nicht mehr vorkommen, daß Schläuche und Leitungen außerhalb des Roboterarms liegen, den Aktionsradius einzelner Armeinheiten einschränken, bei erhöhter Arbeitsgeschwindigkeit hin- und hergeschleudert und stärker verschlissen werden und daß man Armaturen, Schellen und sonstige Halteteile für die Schläuche einspart. Noch wesentlicher ist jedoch, daß in explosionsgefährdeten Räumen die zugeführten Arbeitsmittel abgekapselt in dem entsprechend abgedichteten Roboterarm untergebracht sind. Wenn ferner, wie bei Waschanlagen erforderlich, nicht nur Preßluft, Waschwasser und sonstige Waschflüssigkeiten bzw. Zusätze außer der Energieversorgung zugeführt werden, wird vermieden, daß im rauhen Betrieb außen herumliegende Schläuche beschädigt werden oder leckschlagen.

**Patentansprüche**

1. Roboter mit mindestens einem Roboterarm, der eine Mehrzahl von, insbesondere sechs, als Bewegungsachsen dienende kinematische Armeinheiten aufweist, wobei der Roboterarm mit einer Mehrzahl von unterschiedlichen, Energie und/oder Arbeitsmittel zuführenden Leitungen oder Schläuchen versehen ist, dadurch gekennzeichnet, daß diese Leitungen, Schläuche udgl. (11-16; 20) für die verschiedenen Handhabungsgeräte innerhalb von mindestens einer Anzahl von beweglichen Armeinheiten angeordnet sind.

2. Roboter nach Anspruch 1, dadurch gekennzeichnet, daß diese Leitungen oder Schläuche (11-16; 20) innerhalb aller Armeinheiten (1-6) des Roboters angeordnet sind.

3. Roboter nach Anspruch 1 oder 2, dadurch gekennzeichnet, daß die Leitungen oder Schläuche (11-16; 20) innerhalb eines, sechs Armeinheiten (1-6) aufweisenden Roboterarmes angeordnet sind.

4. Verwendung eines Roboters mit mindestens einem Roboterarm nach einem der Ansprüche 1-3 für die Reinigung von Luft- und Raumfahrzeugen, insbesondere Großraumflugzeugen und von Schiffen.

5. Anwendung eines Roboters mit mindestens einem Roboterarm nach einem der Ansprüche 1-3 für als Schweißzangen ausgebildete Handhabungswerkzeuge.

*Fig. 2*

*Fig. 1*

*Fig. 3*

4

*Fig. 4*

*Fig. 5*

**Europäisches Patentamt**

# EUROPÄISCHER RECHERCHENBERICHT

Nummer der Anmeldung

EP 90 12 4186

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-3 922 930 (FLETCHER) <br> * Spalte 6, Zeilen 20-25; Spalte 7, Zeile 43 - Spalte 8, Zeile 16 * | 1,2 | B 25 J 19/00 |
| Y | --- | 4 | |
| X | US-A-4 855 560 (SONODA) <br> * Spalte 2, Zeile 64 - Spalte 3, Zeile 27; Spalte 3, Zeilen 49-62 * <br> --- | 1,3,5 | |
| X | DE-A-2 228 598 (GEERK) <br> * Seite 2, Zeilen 20-24; Seite 4, Zeile 15 - Seite 5, Zeile 6 * <br> --- | 1,2 | |
| X | GB-A-2 207 655 (KOMATSU) <br> * Seite 9, Zeile 21 - Seite 11, Zeile 11 * <br> --- | 1,2 | |
| Y | EP-A-0 341 134 (AEROSPATIALE) <br> * Seite 2, Zeilen 18-24; Seite 3, Zeilen 46-55 * <br> --- | 4 | |
| A | DE-A-3 601 456 (GMF ROBOTICS) <br> --- | | **RECHERCHIERTE SACHGEBIETE (Int. Cl.5)** |
| A | US-A-4 678 952 (PETERSON) <br> ----- | | B 25 J |

Der vorliegende Recherchenbericht wurde für alle Patentansprüche erstellt

| Recherchenort | Abschlußdatum der Recherche | Prüfer |
|---|---|---|
| DEN HAAG | 17-07-1991 | LAMMINEUR P.C.G. |